# EUROPÄISCHE PATENTSCHRIFT

(11) **EP 1 853 643 B1**
(45) Veröffentlichungstag und Bekanntmachung des Hinweises auf die Patenterteilung: **21.05.2008**
(21) Anmeldenummer: 06706545.8
(22) Anmeldetag: 01.02.2006
(51) Int. Cl.: C08G 63/91, C09K 8/52, C08G 63/685

(54) **POLYMERE UND IHRE HERSTELLUNG UND VERWENDUNG ALS GASHYDRATINHIBITOREN**
POLYMERS AND THEIR PRODUCTION AND USE AS GAS HYDRATE INHIBITORS
POLYMERES, LEUR PRODUCTION ET LEUR UTILISATION COMME INHIBITEURS D'HYDRATES DE GAZ

(30) Priorität: 12.02.2005 DE 102005006421
(43) Veröffentlichungstag der Anmeldung: 14.11.2007
(73) Patentinhaber: Clariant Produkte (Deutschland) GmbH, 65929 Frankfurt am Main (DE)
(72) Erfinder: LEINWEBER, Dirk, 65824 Schwalbach (DE); FEUSTEL, Michael, 55278 Köngernheim (DE)
(74) Vertreter: Mikulecky, Klaus
(86) Internationale Anmeldenummer: PCT/EP2006/000864
(87) Internationale Veröffentlichungsnummer: WO 2006/084613

(56) Entgegenhaltungen:
- US-A- 4 079 041
- US-A- 4 446 301
- US-A- 5 879 561
- US-A- 5 900 516
- US-A- 6 093 862
- US-A- 6 121 033
- US-A1- 2002 002 116
- US-A1- 2003 057 158
- US-B1- 6 417 417

## Beschreibung

Die vorliegende Erfindung betrifft Polymere, bestehend aus substituierten Polyestern, ihre Herstellung und Verwendung sowie ein Verfahren zur Inhibierung von Keimbildung, Wachstum und/oder Agglomeration von Gashydraten, indem einem zur Hydratbildung neigenden, aus Wasser, Gas und ggf. Kondensat bestehenden Mehrphasengemisch oder einer zur Gashydratbildung neigenden Bohrspülflüssigkeit eine wirksame Menge eines Inhibitors zugegeben wird, der substituierte Polyester enthält.

Gashydrate sind kristalline Einschlussverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das aus den Wassermolekülen gebildete Gittergerüst ist thermodynamisch instabil und wird erst durch die Einbindung von Gastmolekülen stabilisiert. Diese eisähnlichen Verbindungen können in Abhängigkeit von Druck und Gaszusammensetzung auch über den Gefrierpunkt von Wasser (bis über 25°C) hinaus existieren.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Nassgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung verschiedenster Fördereinrichtungen, wie Pipelines, Ventilen oder Produktionseinrichtungen, in denen über längere Strecken bei niedrigeren Temperaturen Nassgas oder Mehrphasengemische transportiert werden, wie dies speziell in kälteren Regionen der Erde oder auf dem Meeresboden vorkommt.

Außerdem kann die Gashydratbildung auch beim Bohrvorgang zur Erschließung neuer Gas- oder Erdöllagerstätten bei entsprechenden Druck- und Temperaturverhältnissen zu Problemen führen, indem sich in den Bohrspülflüssigkeiten Gashydrate bilden.

Um solche Probleme zu vermeiden, kann die Gashydratbildung in Gaspipelines, beim Transport von Mehrphasengemischen oder in Bohrspülflüssigkeiten durch Einsatz von größeren Mengen (mehr als 10 Gew.-% bezüglich des Gewichts der Wasserphase) niederen Alkoholen, wie Methanol, Glykol, oder Diethylenglykol unterdrückt werden. Der Zusatz dieser Additive bewirkt, dass die thermodynamische Grenze der Gashydratbildung zu niedrigeren Temperaturen und höheren Drücken hin verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man bei Temperatur- und Druckbereichen, in denen sich Gashydrate bilden können, Additive in Mengen < 2 % zusetzt, die die Gashydratbildung entweder zeitlich hinauszögern (kinetische Inhibitoren) oder die Gashydratagglomerate klein und damit pumpbar halten, so dass diese durch die Pipeline transportiert werden können (sog. Agglomerat-Inhibitoren oder Antiagglomerants). Die dabei eingesetzten Inhibitoren behindern entweder die Keimbildung und/oder das Wachstum der Gashydratpartikel, oder modifizieren das Hydratwachstum derart, dass kleinere Hydratpartikel resultieren.

Als Gashydratinhibitoren wurden in der Patentliteratur neben den bekannten thermodynamischen Inhibitoren eine Vielzahl monomerer als auch polymerer Substanzklassen beschrieben, die kinetische Inhibitoren oder Antiagglomerants darstellen. Von besonderer Bedeutung sind hierbei Polymere mit Kohlenstoff Backbone, die in den Seitengruppen sowohl cyclische (Pyrrolidon- oder Caprolactamreste) als auch acyclische Amidstrukturen enthalten.

So wird in WO-94/12761 ein Verfahren zur kinetischen Inhibierung der Gashydratbildung durch die Verwendung von Polyvinyllactamen mit einem Molekulargewicht von M_{W} > 40.000 D, und in WO-93/25798 wird ein solches Verfahren unter Verwendung von Polymeren und/oder Copolymeren des Vinylpyrrolidons mit einem Molekulargewicht von M_{W} > 5.000 bis 40.000 D-offenbart.

EP-A-0 896 123 offenbart Gashydratinhibitoren, die Copolymere aus alkoxylierter Methacrylsäure ohne Alkyl-Endverschluss und cyclischen N-Vinylverbindungen enthalten können.

EP-A-1 048 892 beschreibt die Verwendung von Additiven zur Fließverbesserung von wasserhaltigem Petroleum, wobei dieses Polyvinylalkohol oder teilverseiftes Polyvinylacetat als Keimbildner für Gashydrate in Verbindung mit geeigneten Dispergatoren enthalten kann. Über den Polyvinylalkohol oder das teilverseifte Polyvinylacetat macht das Dokument keine weitere Feststellung, außer dass deren Molekulargewicht unter 50.000 g/mol liegen soll.

In US-5 244 878 wird ein Verfahren zum Verzögern der Bildung oder Vermindern der Bildungstendenz von Gashydraten beschrieben. Hierzu werden Polyole verwendet, die mit Fettsäuren oder Alkenylbemsteinsäureanhydriden verestert werden. Die hergestellten Verbindungen weisen keine Aminosäurefunktionen auf, die mit Clathraten (Käfigmolekülen) interagieren könnten.

Die beschriebenen Additive besitzen nur eingeschränkte Wirksamkeit als kinetische Gashydratinhibitoren und/oder Antiagglomerants, müssen mit Co-Additiven verwendet werden, oder sind nicht in ausreichender Menge oder nur zu hohen Preisen erhältlich.

Um Gashydratinhibitoren auch bei stärkerer Unterkühlung als derzeit möglich, d.h. weiter innerhalb der Hydratregion einsetzen zu können, bedarf es einer weiteren Wirkungssteigerung im Vergleich zu den Hydratinhibitoren des Standes der Technik. Zusätzlich sind in Bezug auf ihre biologische Abbaubarkeit und Toxizität verbesserte Produkte erwünscht.

Aufgabe der vorliegenden Erfindung war es also, verbesserte Additive zu finden, die sowohl die Bildung von Gashydraten verlangsamen (kinetische Inhibitoren) als auch Gashydratagglomerate klein und pumpbar halten (Antiagglomerants), um so ein breites Anwendungsspektrum mit hohem Wirkpotential zu gewährleisten. Des Weiteren sollten sie in der Lage sein, die derzeit-verwendeten thermodynamischen Inhibitoren (Methanol und Glykole), die beträchtliche Sicherheitsprobleme und Logistikprobleme verursachen, zu ersetzen.

Wie nun überraschenderweise gefunden wurde, eignen sich sowohl wasserlösliche als auch öllösliche substituierte Polyester als Gashydratinhibitoren. Diese Polyester können je nach Struktur sowohl die Keimbildung und das Wachstum von Gashydraten verzögern (kinetische Gashydratinhibitoren) als auch die Agglomeration von Gashydraten unterdrücken (Antiagglomerants).

Gegenstand der Erfindung sind daher Polymere mit einem zahlenmittleren Molekulargewicht von 500 bis 500.000 g/mol herstellbar durch
A) Umsetzung einer Verbindung der Formel 1 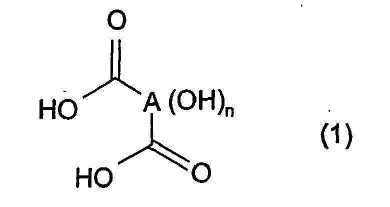 worin n für 0, 1 oder 2 und A für einen beliebig substituierten C₁-C₄₀-Rest stehen, mit einer Verbindung der Formel 2

   B(OH)ₘ (2)

   worin m für eine Zahl von 2 bis 10 und B für einen beliebig substituierten C₂-C₄₀-Rest stehen,
B) nachfolgende Umsetzung des so erhaltenen Produkts mit einer stickstoffhaltigen Carbonsäure, welche 1 bis 20 Kohlenstoffatome umfasst, wobei das molare Verhältnis zwischen der Zahl der freien OH-Gruppen der in Schritt A erhaltenen Polyesters und der stickstoffhaltigen Carbonsäure zwischen 1:0,1 und 1:1 liegt.

Ein weiterer Gegenstand der Erfindung ist ein Verfahren zur Inhibierung der Bildung von Gashydraten, indem einer mit einer gasförmigen, flüssigen oder festen organischen Phase in Verbindung stehenden wässrigen Phase, in der die Gashydratbildung verhindert werden soll, Polymere wie vorstehend definiert in Mengen von 0,01 bis 2 Gew.-% zugesetzt werden.

Ein weiterer Gegenstand der Erfindung ist die Verwendung der erfindungsgemäßen Polymere in Mengen von 0,01 bis 2 Gew.-% zur Verhinderung der Bildung von Gashydraten in wässrigen Phasen, die mit einer gasförmigen, flüssigen oder festen organischen Phase in Verbindung stehen.

A steht vorzugsweise für einen Alkylenrest mit 2 bis 6 Kohlenstoffatomen.

B steht vorzugsweise für einen Alkylenrest mit 2 bis 6 Kohlenstoffatomen.

m steht vorzugsweise für eine Zahl von 2 bis 6.

Die erfindungsgemäßen Polymere sind nach literaturbekannten Verfahren durch Kondensation von substituierten Dicarbonsäuren mit Diolen bzw. Polyolen und anschließende Veresterung der freien OH-Gruppen mit einer N-haltigen Carbonsäure bzw. einer Mischung einer N-haltigen Carbonsäure und einer Fettsäure mit 6 bis 30 Kohlenstoffatomen oder einer aromatischen Reste enthaltenden Carbonsäure darstellbar.

Das bei der Umsetzung zur Anwendung kommende molare Verhältnis der Verbindungen der Formeln 1 und 2 liegt vorzugsweise zwischen 20:80 und 80:20, insbesondere zwischen 30:70 und 70:30.

Nachfolgend wird der erhaltene Polyester mit einer N-haltigen Carbonsäure oder der Mischung einer solchen mit einer Fettsäure mit 6 bis 30 Kohlenstoffatomen oder einer aromatischen Reste enthaltenden Carbonsäure umgesetzt. Vorzugsweise beträgt der Anteil der N-haltigen Carbonsäure, wenn eine solche Mischung eingesetzt wird, mindestens 30 Mol-%, insbesondere 50 Mol-%.

Die Verbindungen der Formel (1) sind in bevorzugter Ausführungsform folgende Dicarbonsäuren: Weinsäure, Äpfelsäure, Maleinsäure, Fumarsäure, Malonsäure, Adipinsäure, Bernsteinsäure, Itaconsäure, Phthalsäure.

Die Verbindungen der Formel (2) sind in bevorzugter Ausführungsform folgende Diole oder Polyole: Glycerin, Diglycerin, Triglycerin, Polyglycerin, Trimethylolpropan, Pentaerythrit, Sorbitol, Ethylenglykol, Diethylenglykol, Propylenglykol, Dipropylenglykol, Butandiol.

Als N-haltige Carbonsäuren sind bevorzugt: Pyroglutaminsäure, Glutaminsäure, Acetursäure, Asparaginsäure.

Werden neben N-haltigen Carbonsäuren auch Fettsäuren verwendet, so sind folgende Fettsäuren bevorzugt: Kokosfettsäure, Tallölfettsäure; Ölsäure, Isoölsäure, Elaidinsäure, Stearinsäure, Palmitinsäure, Laurinsäure, sowie ein Gemisch enthaltend 15-30 Gew.-% Palmitin- und Stearinsäure, 40-60 Gew.-% Isoölsäure, sowie 15-30 Gew.-% Ölsäure und Elaidinsäure.

Die Herstellung von Polyestern ist im Stand der Technik bekannt und erfolgt durch unkatalysierte oder sauer katalysierte Kondensation der jeweiligen Dicarbonsäure mit dem entsprechenden Diol bzw. Polyol. Die Reaktionstemperatur liegt im Allgemeinen zwischen 100 und 250°C, vorzugsweise bei 120 bis 150°C. Die Reaktion kann bei Atmosphärendruck oder vermindertem Druck durchgeführt werden. Als katalysierende Säuren sind beispielsweise HCl, H₂SO₄, Sulfonsäuren, H₃PO₄ oder saure Ionentauscher zu nennen, die in Mengen von 0,1 bis 5 Gew.-%, bezogen auf das Gewicht des Reaktionsgemisches verwendet werden. Die Kondensation nimmt im Allgemeinen 3 bis 10 Stunden in Anspruch.

Die anschließende Veresterung mit N-haltigen Carbonsäuren oder einer Mischung aus N-haltigen und nicht-N-haltigen Carbonsäuren wird ebenfalls unkatalysiert oder unter saurer Katalyse wie im Stand der Technik bekannt bei Temperaturen von 120 bis 250°C durchgeführt.

Das Molekulargewicht der erfindungsgemäßen Polymere liegt vorzugsweise zwischen 500 und 500.000 g/mol, bevorzugt zwischen 1000 bis 50.000 g/mol.

Die Polymere können alleine oder in Kombination mit anderen bekannten Gashydratinhibitoren eingesetzt werden. Im Allgemeinen wird man dem zur Hydratbildung neigenden System soviel des erfindungsgemäßen Gashydratinhibitors zusetzen, dass man unter den gegebenen Druck- und Temperaturbedingungen eine ausreichende Inhibierung erhält. Die erfindungsgemäßen Gashydratinhibitoren werden im Allgemeinen in Mengen zwischen 0,01 und 2 Gew.-% (bezogen auf das Gewicht der wässrigen Phase), entsprechend 100 - 20.000 ppm, vorzugsweise 0,02 bis 1 Gew.-% verwendet. Werden die erfindungsgemäßen Gashydratinhibitoren in Mischung mit anderen Gashydratinhibitoren verwendet, so beträgt die Konzentration der Mischung 0,01 bis 2 bzw. 0,02 bis 1 Gew.-% in der wässrigen Phase.

Die Polymere werden vorzugsweise zur Anwendung als Gashydratinhibitoren in wassermischbaren alkoholischen Lösungsmitteln wie z.B. Methanol, Ethanol, Propanol, Butanol, Ethylenglykol sowie oxethylierten Monoalkoholen, wie Butylglykol, Isobutylglykol, Butyldiglykol gelöst.

### Beispiele

### Herstellung der Polymere

### Beispiel 1

### Herstellung eines Weinsäure-Glycerin-Polyesters (Variante 1)

In einem 500 ml Vierhalskolben mit Rührer, Thermometer, Stickstoffspülung sowie Destillationsbrücke wurden 120 g L-Weinsäure, 96 g Glycerin sowie 2,2 g p-Toluolsulfonsäure vermischt und auf 140°C erhitzt. Innerhalb von 10 h bei 140-145°C wurden ca. 24 ml Wasser abdestilliert. Der resultierende Polyester weist eine Säurezahl von 96 mg KOH/g auf.

### Beispiel 2

### Herstellung eines Weinsäure-Glycerin-Polyesters (Variante 2)

In einem 500 ml Vierhalskolben mit Rührer, Thermometer, Stickstoffspülung sowie - Destillationsbrücke wurden 120 g L-Weinsäure, 96 g Glycerin sowie 2,2g p-Toluolsulfonsäure vermischt und auf 140°C erhitzt. Innerhalb von 4 h bei 140-145°C wurden ca. 20 ml Wasser abdestilliert. Nun wurden bei einem verminderten Druck von ca. 300 mbar 3 h lang weitere 6 ml Wasser abdestilliert. Der resultierende Polyester weist eine Säurezahl von 60 mg KOH/g auf.

### Beispiel 3

### Herstellung eines Äpfelsäure-Glycerin-Polyesters

In einem 500 ml Vierhalskolben mit Rührer, Thermometer, Stickstoffspülung sowie Destillationsbrücke wurden 134 g Äpfelsäure, 120 g Glycerin sowie 2,6 g p-Toluolsulfonsäure vermischt und auf 130°C erhitzt. Innerhalb von 12 h bei 130°C wurden ca. 32 ml Wasser abdestilliert. Der resultierende Polyester weist eine Säurezahl von 98 mg KOH/g auf.

### Beispiel 4

### Herstellung eines Weinsäure-Ethylenglykol-Polyesters

In einem 500 ml Vierhalskolben mit Rührer, Thermometer, Stickstoffspülung sowie Destillationsbrücke wurden 150 g L-Weinsäure, 81 g Ethylenglykol sowie 2,3 g p-Toluolsulfonsäure vermischt und auf 140°C erhitzt. Innerhalb von 12 h bei 140-145°C wurden ca. 34 ml Wasser abdestilliert. Der resultierende Polyester weist eine Säurezahl von 104 mg KOH/g auf.

### Beispiel 5

### Umsetzung eines Weinsäure-Glycerin-Polyesters mit Pyroglutaminsäure

In einem 500 ml Vierhalskolben mit Rührer, Thermometer, Stickstoffspülung sowie Destillationsbrücke wurden 100 g Weinsäure-Glycerin-Polyester aus Beispiel 1 vorgelegt. Nun wurden 90 g Pyroglutaminsäure hinzugegeben und die Reaktionsmischung für 8 h bei 180-190°C unter Abdestillieren des Reaktionswassers erhitzt, wobei ca. 10 ml Wasser erhalten wurden. Der erhaltene Polyester wies eine Säurezahl von 57 mg KOH/g auf.

### Beispiel 6

### Umsetzung eines Weinsäure-Glycerin-Polyesters mit Glutaminsäure

In einem 500 ml Vierhalskolben mit Rührer, Thermometer, Stickstoffspülung sowie Destillationsbrücke wurden 100 g Weinsäure-Glycerin-Polyester aus Beispiel 2 vorgelegt. Nun wurden 80 g Glutaminsäure hinzugegeben und die Reaktionsmischung für 8 h bei 170-180°C unter Abdestillieren des Reaktionswassers erhitzt, wobei ca. 15 ml Wasser erhalten wurden. Der erhaltene Polyester wies eine Säurezahl von 48 mg KOH/g auf.

### Beispiel 7

### Umsetzung eines Weinsäure-Glycerin-Polyesters mit Pyroglutaminsäure und Kokosfettsäure

In einem 500 ml Vierhalskolben mit Rührer, Thermometer, Stickstoffspülung sowie Destillationsbrücke wurden 100 g Weinsäure-Glycerin-Polyester aus Beispiel 1 vorgelegt. Nun wurden 50 g Pyroglutaminsäure und 40 g Kokosfettsäure hinzugegeben und die Reaktionsmischung für 8 h bei 180-190°C unter Abdestillieren des Reaktionswassers erhitzt, wobei ca. 11 ml Wasser erhalten wurden. Der erhaltene Polyester wies eine Säurezahl von 53 mg KOH/g auf.

### Beispiel 8

### Umsetzung eines Weinsäure-Glycerin-Polyesters mit Glutaminsäure und Kokosfettsäure

In einem 500 ml Vierhalskolben mit Rührer, Thermometer, Stickstoffspülung sowie Destillationsbrücke wurden 100 g Weinsäure-Glycerin-Polyester aus Beispiel 2 vorgelegt. Nun wurden 40 g Glutaminsäure und 40 g Kokosfettsäure hinzugegeben und die Reaktionsmischung für 8 h bei 170-180°C unter Abdestillieren des Reaktionswassers erhitzt, wobei ca. 16 ml Wasser erhalten wurden. Der erhaltene Polyester wies eine Säurezahl von 45 mg KOH/g auf.

### Wirksamkeit der Polymere als Gashydratinhibitoren

Zur Untersuchung der inhibierenden Wirkung der Polyester wurde ein Stahlrührautoklav mit Temperatursteuerung, Druck- und Drehmomentaufnehmer mit 450 ml innenvolumen benutzt. Für Untersuchungen zur kinetischen Inhibierung wurde der Autoklav mit destillierten Wasser und Gas im Volumenverhältnis 20:80 gefüllt, für Untersuchungen der Agglomeratinhibierung wurde zusätzlich Kondensat zugegeben. Abschließend wurden 90 bar Erdgas aufgedrückt. Ausgehend von einer Anfangstemperatur von 17,5°C wurde innerhalb 2 h auf 2°C abgekühlt, dann 18 h bei 2°C gerührt und innerhalb von 2 h wieder auf 17,5°C aufgeheizt. Dabei wird zunächst eine Druckabnahme gemäß der thermischen Kompression des Gases beobachtet. Tritt während der Unterkühlzeit die Bildung von Gashydratkeimen auf, so verringert sich der gemessene Druck, wobei ein Anstieg des gemessenen Drehmoments und ein leichter Anstieg der Temperatur zu beobachten ist. Weiteres Wachstum und zunehmende Agglomeration der Hydratkeime führt ohne Inhibitor schnell zu einem weiteren Anstieg des Drehmomentes. Beim Aufwärmen des Gemisches zerfallen die Gashydrate, so dass man den Anfangszustand der Versuchsreihe erreicht.

Als Maß für die inhibierende Wirkung des Polymers wird die Zeit vom Erreichen der Minimaltemperatur von 2°C bis zur ersten Gasaufnahme (T_{ind}) bzw. die Zeit bis zum Anstieg des Drehmomentes (T_{agg}) benutzt. Lange Induktionszeiten bzw. Agglomerationszeiten weisen auf eine Wirkung als kinetischer Inhibitor hin. Das im Autoklaven gemessene Drehmoment dient dagegen als Größe für die Agglomeration der Hydratkristalle. Bei einem guten Antiagglomerant ist das Drehmoment, das sich nach Bildung von Gashydraten aufbaut, gegenüber dem Blindwert deutlich verringert. Im Idealfall bilden sich schneeartige, feine Hydratkristalle in der Kondensatphase, die sich nicht zusammenlagern und somit nicht zum Verstopfen der zum Gastransport und zur Gasförderung dienenden Installationen führen.

### Testergebnisse

Zusammensetzung des verwendeten Erdgases:
Methan 87,6 %, Ethan 1,26 %, Propan 0,08 %, Butan 0,02 %, Kohlendioxid 0,35 %, Stickstoff 10,61%.
Unterkühlung unter die Gleichgewichtstemperatur der Hydratbildung bei 90 bar: 8,5°C.

Als Vergleichssubstanz wurde ein kommerziell erhältlicher Gashydratinhibitor auf Basis Polyvinylpyrrolidon verwendet.

Die Dosierrate betrug bei allen Versuchen 5000 ppm bezogen auf die Wasserphase.

| Polyester aus Beispiel | T_{ind} (h) | T_{agg} (h) |
|---|---|---|
| Blindwert | 0 | 0 |
| 5 | 14,2 | 14,2 |
| 6 | 12,1 | 12,3 |
| 7 | 10,5 | 11,0 |
| 8 | 11,0 | 11,8 |
| Vergleich | 3,0 | 3,1 |

Wie aus den obigen Testresultaten zu erkennen ist, wirken die erfindungsgemäßen Polyester als kinetische Hydratinhibitoren, und zeigen eine deutliche Verbesserung gegenüber dem Stand der Technik.

Um die Wirkung als Agglomeratinhibitoren zu prüfen, wurde im oben verwendeten Testautoklaven Wasser und Testbenzin vorgelegt (20 % des Volumens im Verhältnis 1:2) und bezogen auf die Wasserphase 5000 ppm des jeweiligen Additivs zugegeben.
Bei einem Autoklavendruck von 90 bar und einer Rührgeschwindigkeit von
5000 U/min wurde die Temperatur von anfangs 17,5°C innerhalb 2 Stunden auf 2°C abgekühlt, dann 16 Stunden bei 2°C gerührt und wieder aufgewärmt. Dabei wurden die Agglomerationszeit bis zum Auftreten von Gashydrat-Agglomeraten und das dabei auftretende Drehmoment am Rührer gemessen, das ein Maß für die Agglomeration der Gashydrate ist.
Als Vergleichssubstanz wurde ein kommerziell erhältlicher Anti-Agglomerant (quartäres Ammoniumsalz) herangezogen.

| Polyester aus Beispiel | T_{agg} (h) | Mₘₐₓ (Ncm) |
|---|---|---|
| Blindwert | 0,1 | 15,9 |
| 5 | 8,5 | 1,2 |
| 6 | 9,1 | 1,4 |
| 7 | 12,1 | 0,9 |
| 8 | 11,2 | 1,0 |
| Vergleich | 2,2 | 3,7 |

Wie aus diesen Beispielen zu ersehen ist, sind die gemessenen Drehmomente im Vergleich zum Blindwert trotz Gashydratbildung stark reduziert. Dies spricht für eine deutliche agglomeratinhibierende Wirkung der erfindungsgemäßen Produkte. Zusätzlich weisen die Produkte unter den Versuchsbedingungen auch eine deutliche Wirkung als kinetische Inhibitoren auf. Sämtliche Beispiele zeigen eine deutlich bessere Performance als der kommerziell erhältliche Anti-Agglomerant (Vergleich = Stand der Technik).

## Patentansprüche

1. Verwendung von Polymeren mit einem zahlenmittleren Molekulargewicht von 500 bis 500.000 g/mol, herstellbar durch
A) Umsetzung einer Verbindung der Formel 1 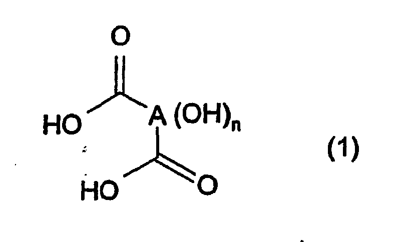 worin n für 0, 1 oder 2 und A für einen beliebig substituierten C₁-C₄₀-Rest stehen, mit einer Verbindung der Formel 2
B(OH)ₘ (2)
worin m für eine Zahl von 2 bis 10 und B für einen beliebig substituierten C₂-C₄₀-Rest stehen,
B) nachfolgende Umsetzung des so erhaltenen Produkts mit einer stickstoffhaltigen Carbonsäure, welche 1 bis 20 Kohlenstoffatome umfasst, wobei das molare Verhältnis zwischen der Zahl der freien OH-Gruppen der in Schritt A erhaltenen Polyesters und der stickstoffhaltigen Carbonsäure zwischen 1:0,1 und 1:1 liegt, in Mengen von 0,01 bis 2 Gew.-% als Gashydratinhibitoren.

2. Verwendung gemäß Anspruch 1, worin die Verbindung der Formel 1 Weinsäure, Äpfelsäure, Maleinsäure, Fumarsäure, Malonsäure, Adipinsäure, Bernsteinsäure oder Phthalsäure ist.

3. Verwendung gemäß Anspruch 1 und/oder 2, worin die Verbindung der Formel 2 Glycerin, Diglycerin, Triglycerin, Polyglycerin, Trimethylolpropan, Pentaerythrit, Sorbitol, Ethylenglykol, Diethylenglykol, Propylenglykol, Dipropylenglykol oder Butandiol ist.

4. Verwendung gemäß einem oder mehreren der Ansprüche 1 bis 3, worin die stickstoffhaltige Carbonsäure Pyroglutaminsäure, Glutaminsäure, Acetursäure oder Asparaginsäure ist.

5. Verwendung gemäß einem oder mehreren der Ansprüche 1 bis 4, wobei das Molekulargewicht der Polymere zwischen 1.000 und 50.000 g/mol liegt.

6. Verwendung gemäß einem oder mehreren der Ansprüche 1 bis 5, worin die Veresterung mit einer Mischung aus einer oder mehreren stickstoffhaltigen Carbonsäuren mit einer C₆-C₃₀-Fettsäure oder mit einer aromatische Reste enthaltenden Carbonsäure durchgeführt wurde.

7. Polymere mit einem zahlenmittleren Molekulargewicht von 500 bis 500.000 g/mol, herstellbar durch
A) Umsetzung einer Verbindung der Formel 1 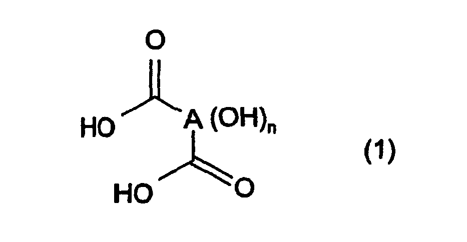 worin n für 1 oder 2 und A für einen beliebig substituierten C₁-C₄₀-Rest stehen, mit einer Verbindung der Formel 2
B(OH)ₘ (2)
worin m für eine Zahl von 2 bis 10 und B für einen beliebig substituierten C₂-C₄₀-Rest stehen,
B) nachfolgende Umsetzung des so erhaltenen Produkts mit einer stickstoffhaltigen Carbonsäure, welche 1 bis 20 Kohlenstoffatome umfasst, wobei das molare Verhältnis zwischen der Zahl der freien OH-Gruppen der in Schritt A erhaltenen Polyesters und der stickstoffhaltigen Carbonsäure zwischen 1:0,1 und 1:1 liegt.

## Claims

1. The use of polymers having a number-average molecular weight of from 500 to 500 000 g/mol, preparable by
A) reacting a compound of the formula 1 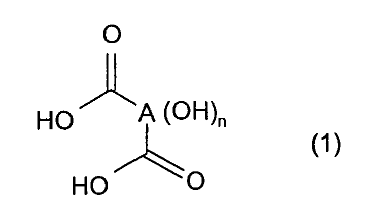 in which n is 0, 1 or 2 and A is a C₁-C₄₀ radical substituted as desired with a compound of the formula 2
B(OH)ₘ (2)
in which m is from 2 to 10 and B is a C₂-C₄₀ radical substituted as desired,
B) subsequently reacting the product thus obtained with a nitrogen-containing carboxylic acid which comprises from 1 to 20 carbon atoms, where the molar ratio between the number of free OH groups of the polyester obtained in step A and the nitrogen-containing carboxylic acid is between 1:0.1 and 1:1, in amounts of from 0.01 to 2% by weight as gas hydrate inhibitors.

2. The use as claimed in claim 1, in which the compound of the formula 1 is tartaric acid, malic acid, maleic acid, fumaric acid, malonic acid, adipic acid, succinic acid or phthalic acid.

3. The use as claimed in claim 1 and/or 2, in which the compound of the formula 2 is glycerol, diglycerol, triglycerol, polyglycerol, trimethylolpropane, pentaerythritol, sorbitol, ethylene glycol, diethylene glycol, propylene glycol, dipropylene glycol or butanediol.

4. The use as claimed in one or more of claims 1 to 3, in which the nitrogen-containing carboxylic acid is pyroglutamic acid, glutamic acid, aceturic acid or aspartic acid.

5. The use as claimed in one or more of claims 1 to 4, where the molecular weight of the polymers is between 1000 and 50 000 g/mol.

6. The use as claimed in one or more of claims 1 to 5, in which the esterification has been performed with a mixture of one or more nitrogen-containing carboxylic acids with a C₆-C₃₀ fatty acid or with a carboxylic acid containing aromatic radicals.

7. A polymer having a number-average molecular weight of from 500 to 500 000 g/mol, preparable by
A) reacting a compound of the formula 1 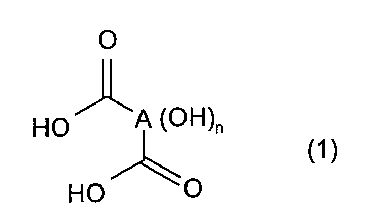 in which n is 1 or 2 and A is a C₁-C₄₀ radical substituted as desired with a compound of the formula 2
B(OH)ₘ (2)
in which m is from 2 to 10 and B is a C₂-C₄₀ radical substituted as desired,
B) subsequently reacting the product thus obtained with a nitrogen-containing carboxylic acid which comprises from 1 to 20 carbon atoms, where the molar ratio between the number of free OH groups of the polyester obtained in step A and the nitrogen-containing carboxylic acid is between 1:0.1 and 1:1.

## Revendications

1. Utilisation de polymères avec une masse moléculaire moyenne en nombre de 500 à 500 000 g/mol, pouvant être fabriqués par
A) Réaction d'un composé de formule 1 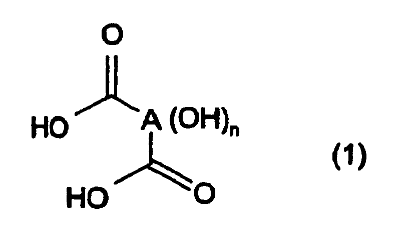 dans laquelle n représente 0, 1 ou 2 et A représente un radical substitué quelconque en C₁ à C₄₀, avec un composé de formule 2
B(OH)ₘ (2)
B) ensuite réaction du produit ainsi obtenu avec un acide carboxylique contenant de l'azote, qui comprend 1 à 20 atomes de carbone, le rapport molaire entre le nombre des groupes OH libres des polyesters obtenus à l'étape A et de l'acide carboxylique contenant de l'azote se situant entre 1:0,1 et 1:1, en quantités de 0,01 à 2 % en poids comme inhibiteurs d'hydrates de gaz.

2. Utilisation selon la revendication 1, dans laquelle le composé de formule 1 est l'acide tartrique, l'acide malique, l'acide maléique, l'acide fumarique, l'acide malonique, l'acide adipique, l'acide succinique ou l'acide phtalique.

3. Utilisation selon la revendication 1 et/ou 2, dans laquelle le composé de formule 2 est le glycérol, diglycérol, triglycérol, polyglycérol, triméthylol-propane, pentaérythritol, sorbitol, éthylèneglycol, diéthylèneglycol, propylèneglycol, dipropylèneglycol ou butanediol.

4. Utilisation selon une ou plusieurs des revendications 1 à 3, dans laquelle l'acide carboxylique contenant de l'azote est l'acide pyroglutamique, l'acide glutamique, l'acétylglycine ou l'acide asparagique.

5. Utilisation selon une ou plusieurs des revendications 1 à 4, dans laquelle la masse moléculaire des polymères se situe entre 1 000 et 50 000 g/mol.

6. Utilisation selon une ou plusieurs des revendications 1 à 5, dans laquelle on a effectué l'estérification avec un mélange d'un ou plusieurs acides carboxyliques contenant de l'azote avec un acide gras en C₆ à C₃₀ ou avec un acide carboxylique contenant des radicaux aromatiques.

7. Polymères avec une masse moléculaire moyenne en nombre de 500 à 500 000 g/mol pouvant être fabriqués par
A) Réaction d'un composé de formule 1 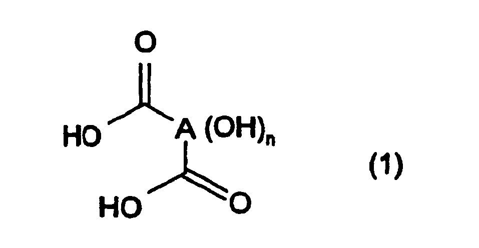 dans laquelle n représente 1 ou 2 et A représente un radical substitué quelconque en C₁ à C₄₀, avec un composé de formule 2
B (OH)ₘ (2)
dans laquelle m représente un nombre de 2 à 10 et B représente un radical substitué quelconque en C₂ à C₄₀,
B) ensuite réaction du produit ainsi obtenu avec un acide carboxylique contenant de l'azote, qui comprend 1 à 20 atomes de carbone, le rapport molaire entre le nombre des groupes OH libres des polyesters obtenus à l'étape A et de l'acide carboxylique contenant de l'azote se situant entre 1:0,1 et 1:1.
